# EUROPEAN PATENT APPLICATION

(11) **EP 1 102 175 A1**
(43) Date of publication of application: **23.05.2001**
(21) Application number: 99830719.3
(22) Date of filing: 22.11.1999
(51) Int. Cl.: G06F 15/78

(54) **Neuro-Fuzzy network architecture with on-line learning capabilities and corresponding control method**

(71) Applicant: STMicroelectronics S.r.l., 20041 Agrate Brianza (Milano) (IT)
(72) Inventor: Occhipinti, Luigi, 97100 Ragusa (IT); Di Cola, Eusebio, 98100 Messina (IT); Lavorgna, Mario, 80070 Bacoli (NA) (IT)
(74) Representative: Botti, Mario

(57) **Abstract**

The invention relates to a novel neuro-fuzzy integrated architecture which permits of on-line self-training. The architecture comprises at least one microcontroller (11) of the fuzzy type (fuzzyfier/defuzzyfier), dedicated to fuzzy rules computing and integrated monolythically on a semiconductor together with a non-volatile memory (9). Also provided within the same integrated circuit, are a microprocessor (5), a volatile memory unit (2), and an arbiter block (3) which is linked to a bus (4) interconnecting the fuzzy microcontroller (11), the microprocessor (5) and said volatile memory unit (2); the arbiter block (3) acts to control access to the memory unit (2) by the microprocessor (5) or the fuzzy microcontroller (11). An additional fuzzy co-processor (6) is connected between the fuzzy microcontroller (11) and the microprocessor (5) for handling the fuzzy logic operations.

## Description

### Field of the Invention

This invention relates to a neuro-fuzzy network architecture having self-training or on-line learning capabilities.

The invention particularly relates to a self-training neuro-fuzzy network architecture of the type which comprises at least one fuzzy microcontroller (fuzzyfier/defuzzyfier) dedicated for calculating fuzzy rules which is integrated monolithically in a semiconductor along with a non-volatile memory.

The invention also relates to a method of electronic control by self-training for semiconductor-integrated electronic devices.

Currently available on the market of electronic devices integrated monolithically in a semiconductor are groups of fuzzy logic products which fall mostly in the class of processors, microcontrollers or general purpose fuzzy co-processors.

However, these products are unsuitable for operation in an on-line learning and self-training mode. For example, there exist no commercially available devices which include circuit portions adapted to process dedicated self-training instructions.

The non-availability of integrated devices with self-training processing features makes prior art approaches hardly suitable to address late problems requiring a capability to accommodate process variations and changing environmental conditions. Such is the case, for instance, with the control of fuel injection systems in internal combustion engines, and with other automotive aspects.

This invention is directed to provide a semiconductor integrated electronic device with such construction and operation features as to enable processing of predetermined instructions or data processing procedures by self-training.

The technical problem addressed by this invention is to provide a programmable device as above which is of the neuro-fuzzy type.

### Summary of the Invention

The concept on which this invention stands is to provide a programmable integrated device of the neuro-fuzzy type with dedicated hardware appropriate for it to have on-line learning capabilities. In essence, the invention provides a fuzzy neural system (hereinafter Fuzzy Neural Network or FNN) which utilizes the properties of neural networks to automatically learn the variations of a process to be controlled, as well as to adjust its behavior accordingly by adaptation of the fuzzy rule system parameters for utmost efficiency throughout.

Based on this concept, the technical problem is solved by an architecture as previously indicated and defined in the characterizing portion of Claim 1.

The invention also relates to a control method by self-training as previously indicated and defined in Claim 10.

The features and advantages of the architecture and method according to the invention will become apparent from the following description of embodiments thereof, given by way of illustration and not of limitation with reference to the accompanying drawings.

### Brief Description of the Drawings

In the drawings:
Figure 1 shows schematically a neuro-fuzzy network architecture according to the invention;
Figure 2 shows schematically one example of a memory word containing learning instructions for the architecture of Figure 1;
Figure 3 shows schematically another example of a memory word containing fuzzy logic information;
Figure 4 shows schematically an arbiter block incorporated to the architecture of Figure 1;
Figures 6A, 6B and 6C show respective plots of fuzzy logic membership functions used in the architecture of Figure 1;
Figure 7 illustrates schematically the construction of a fuzzy microcontroller incorporated to the architecture of Figure 1;
Figure 8 illustrates schematically a modified embodiment of the fuzzy microcontroller incorporated to the architecture of Figure 1;

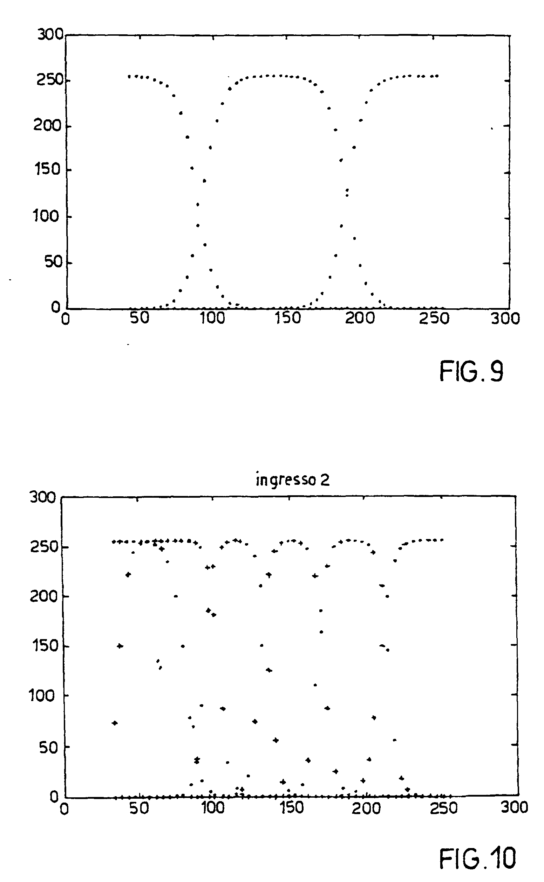

Figures 9 and 10 illustrate schematically the membership functions used in the architecture of this invention;
Figure 11 shows schematically a particular component of the architecture in Figure 1;
Figure 12 shows another particular component of the architecture according to the invention;
Figure 13 is a plot of fuzzy logic membership functions used in the architecture of Figure 1;
Figure 14 shows schematically a particular component of the architecture in Figure 1.

### Detailed Description

With reference to the drawing figures, a circuit architecture according to this invention, for implementing an on-line self-training neuro-fuzzy network in a single integrated electronic device, is generally shown at 1 in schematic form.

The architecture 1 is basically a complex integrated system including a number of functional blocks, to be described both as to their inner construction and interconnections with other blocks.

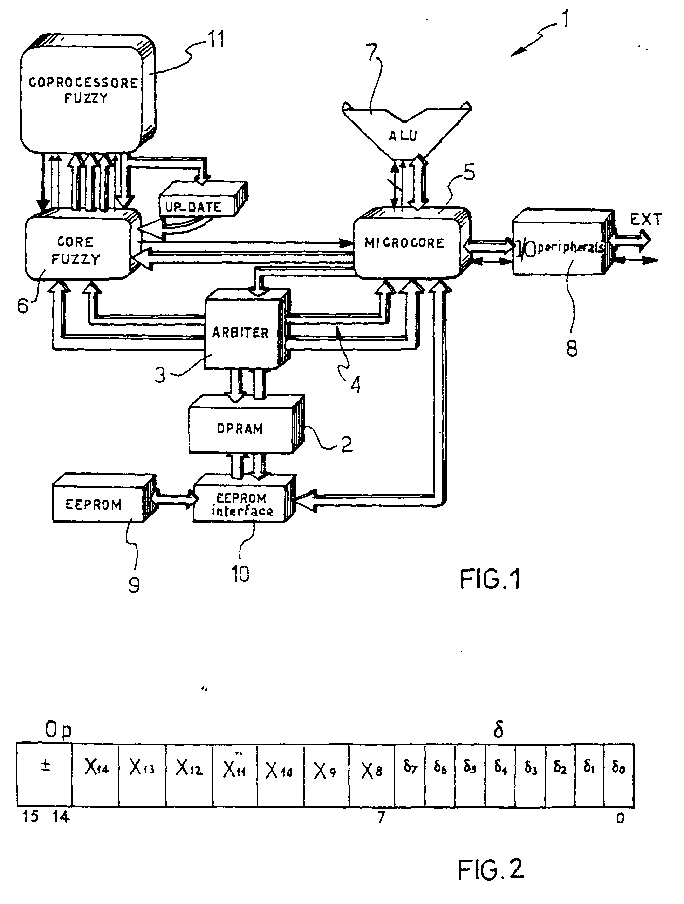

The inner construction of the whole system is shown diagramatically in Figure 1 and comprises:
a memory unit 2, preferably but not exclusively of the DPRAM (Dual Port RAM) type;
an arbitration block ARBITER 3 adapted to manage the arbitration of a bus 4 interlinking the components of the system 1;
a microcore or microprocessor 5 representing the decision or master portion of the system 1;
a dedicated fuzzy co-processor or fuzzyfier/defuzzyfier 11 for calculating the fuzzy rules;
a core fuzzy 6, which a dedicated co-processor adapted to manage the fuzzy operations;
a dedicated ALU (Arithmetic Logic Unit) 7 for carrying out algebraic operations between various internal registers of the microcore 5 and the ALU 7 itself;
a peripheral unit handling, I/O module 8 for interfacing to certain external peripheral units;
a non-volatile memory 9, such as an EEPROM or some other type of non-volatile memory unit; and
an interface 10 for an exchange of data between the DPRAM unit 2 and the non-volatile EEPROM 9.

Briefly, the method of electronic control by self-training implemented by the architecture 1 of this invention is as explained herein below.

To provide the neuro-fuzzy network with improved interpreting capabilities, sigmoid and triangular activation functions are used as explained hereinafter.

The operational code for the action to be taken, i.e. the code containing the fuzzy rules, learning rules, and other calculation instructions employed, is stored in the EEPROM 9, the latter being dumped into the DPRAM 2 at power-on. It is from this memory that the microcore 5 picks up for interpretation the set of instructions to be executed.

When the instruction is of the fuzzy type, the microcore 5 supplies the arbiter block 3 with a signal enabling the core fuzzy 6 to read from the DPRAM unit 2. The core fuzzy 6 will then control the fuzzy co-processor 11 to execute the various rules. When the instructions are not a fuzzy type, the instructions are executed directly by the microcore 5, or by the ALU 7 where algebraic operations are involved.

The construction, interconnections and operation of the individual functional blocks of the architecture 1 will now be described.

### Microcore Block 5

The microprocessor or microcore 5 is the heart of the system 1, and it decides on the action to be taken for each instruction read from the DPRAM unit 2. This microcore 5 is enabled by a signal START from outside the integrated architecture 1. For example, the signal START could issue from a sensing device whatever mounted on the same supporting board as the architecture 1.

Upon receiving the signal START, the microcore 5 begins to read, from the memory 2, the number of fuzzy rules and the addresses where the parameters W, X, Y, MU are respectively stored or to be stored in the memory.

In the initial state, the microcore 5 enables the arbiter block 3 by means of a signal SEL=0 enabling it to read from the DPRAM unit 2. At the same time, the core fuzzy 6 is temporarily disconnected.

Simultaneously, the address bus 4 allows the first location in the memory unit 2, being 0000 in the hexadecimal code, to be addressed, thereby placing the unit 2 in a read condition by enabling the signals RNW and NOTCS.

Upon receiving the signal START, the microcore 5 goes over into the where the numerical value 32768 results from the bit op being at the fifteenth location and having, accordingly, the weighting 2¹⁵.

The learning step is carried out taking account of the error which exists between the actual output from the FNN network, designated y_{FNN}, and the target output, for the type of input pattern designated y_{target}, namely:${\text{w(t+1) = w(t)±(δ*µ)*(y}}_{\text{FNN}} {\text{-y}}_{\text{target}} \text{)}$

In actual practice, the following empirical relationship is more frequently used:$\text{w(t+1) = w(t) ± (δ∗µ) 1/1024}$ and to execute it, the microcore 5 must have received the values of the current weightings and the activation values, and is to effect the division through 1024 (which is merely a ten-position rightward shift of the word δ∗µ), execute the operation contained in Op with the weightings loaded from the DPRAM unit 2, and store these values at the locations of the previously used weightings, overwriting them.

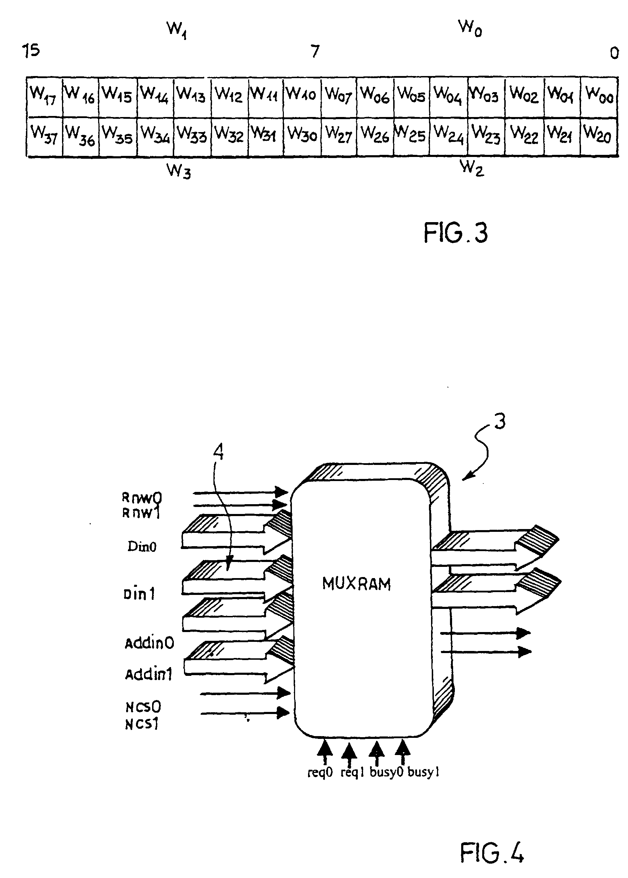

The weightings locate in the memory, being stored as bytes within a word comprised of two bytes, so that one word will contain two weightings W. The format of these weightings is shown in Figure 3.

Thus, a word of weighting W1 will have the binary value of the following number stored in it:${\text{w}}_{\text{1}} {\text{* 256 + w}}_{\text{0}}$

The same applies to the weightings W2 and W3, and the operation is iterated for all the fuzzy rules.

The iteration is performed by comparing the cumulative value in a counter, designated CURRUL, which specifies the current rule, with the number of rules NRULES stored in the DPRAM unit 2; as long as CURRUL<NRULES, the microcore 5 will iterate the comparison, otherwise it goes into the next state.
next state, otherwise it is kept in the initial state. In the states that come immediately afterwards, the microcore 5 will be respectively input the parameters WPOS, XPOS, YPOS, MUPOS and ADDRULES representing the addresses of the locations in the memory unit 2 where the weightings of the connections, the fuzzy inputs, defuzzyfied outputs from the fuzzy co-processor, activating values of the fuzzy rules, and address of the fuzzy rule calculation subroutine are respectively stored or to be stored. There are 256 addresses for the fuzzy rule calculation subroutine, with 8 inputs and 4 outputs per rule.

Directly after loading the parameters, the commands, i.e. the instructions, are interpreted which, additionally to being fuzzy types, may be arithmetic or interrupt management types, in both hardware and software, such as INT1 relating to the FNN network learning.

The appearance of the hexadecimal code 0036 in the code stored in the DPRAM 2 results in the microcore 5 entering and being held in a wait state until it receives an interrupt signal (INTO, INT1, INT2, or NMI).

On the other hand, when a hexadecimal code FF80 is read, a learning step is to be carried out, and the microcore 5 jumps to a relative state in which it acquires the sign of the weighting variations and the learning coefficient, as explained hereinafter.

This information is always contained in the DPRAM unit 2, and is specified herein below to make the invention more clearly understood.

This information about learning has the format shown in Figure 2.

Op may have a logic value of 0 or 1. When 0, it indicates a subtract operation, and when 1, it indicates an add operation.

The bits from the seventh to the 14th (shown shaded) are not used, and therefore, the above memory word will contain the numerical value expressed by the following number in binary form:$\text{32768*op + δ}$

### Arbiter Block 3

The arbiter block 3 is a circuit block designed to prevent possible clashes from occurring between the core fuzzy 6 and the microcore 5 when both of them try to access the DPRAM unit 2. Initially, only the microcore 5 is enabled to read from the DPRAM unit 2, and will interpret instructions found therein and decide on the operations to be effected. In fact, if the microcore 5 encounters a fuzzy rule code at a given address in the DPRAM unit 2, it then enables the core fuzzy 6 and simultaneously allows the arbiter block 3 to handle the access to the DPRAM unit 2 as appropriate.

Conversely, if the microcore 5 reads non-fuzzy instructions, the arbiter block 3 will just enable the microcore 5.

The arbiter block is shown diagramatically in Figure 4.

### ALU (Arithmetic Logic Unit) 7

The arithmetic logic unit 7 has been included as an option to allow the architecture 1 to perform computational operations not only of the fuzzy type but also of the mathematical type. This unit 7 will excute, as directed by the microcore 5, arithmetic operations (addition, subtraction, multiplication, division), logic operations (AND, OR, NOT, EXOR), as well as other data manipulations such as exchanging the contents of internal registers with memory locations, right- and leftward shifts, single-bit testing, etc..

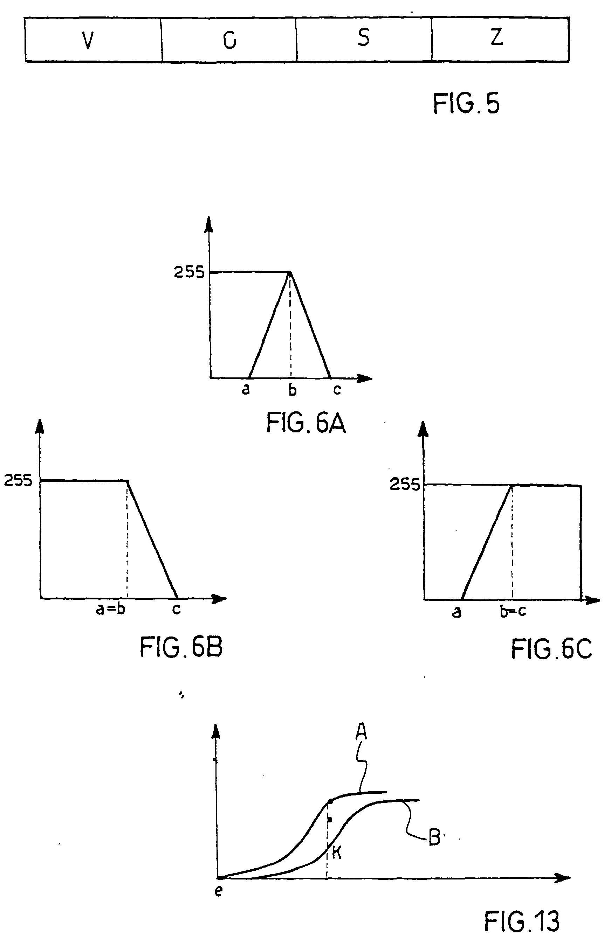

The ALU 7 includes internal circuitry arranged to perform the above-listed functions, and at least three sixteen-bit internal registers, designated A, B, C, a thirty two bits calculation block Alucalc, and a four bits flag register, shown in Figure 5.

The flag registers are modified by the ALU 7 according to the type of the computation result.

The internal representation of the numbers is as follows:

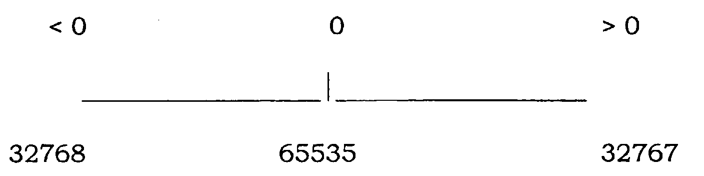

The operations that the ALU 7 can effect are: loading a memory location into a register and the other way round, having two registers exchange their contents, additions, subtractions, divisions, multiplications, RCR and LCR shifts, logic operations, etc..

The ALU 7 is a ten-state sequential machine adapted, in each of its states, to execute a given operation and make ready for fetching the next.

It includes an intelligent portion that allows it to interpret instructions and perform operations of the A*(B+C) type at once by means of its three internal registers.

### Core Fuzzy 6

The core fuzzy 6 is a second dedicated microprocessor for handling and controlling the fuzzy co-processor, also called the fuzzyfier/defuzzyfier.

This microprocessor is to supply the fuzzyfier/defuzzyfier with properly timed control signals, and to handle the defuzzyfied outputs and the activation values of the "if" parts of the fuzzy rules.

The core fuzzy 6 is a sequential machine working with sixteen bits and is basically a slave to the microcore 5 acting as the master. This core fuzzy 6 is enabled by the microcore 5 issuing a signal START, which is brought to a high logic value only upon the instruction START FUZZY RULES being read from the DPRAM 2 or from an interrupt INTO. The machine language code of the fuzzy rules locates in a dedicated area of the DPRAM unit 2 extending from the address ADDRULES.

Initially, the core 6 is in its initial state in which it clears the outputs, and the address bus contains the address of the memory location ADDRULES where the fuzzy routines are stored. In this starting condition, a step of fetching these routines is carried out. In this state, the core 6 will be waiting for the signal START to be enabled to the next state by the microcore 5, otherwise the core fuzzy 6 retains its initial state.

### Fuzzy Co-processor 11

This module comes in two possible versions: one for membership functions or fuzzy activation functions of the triangular type, and the other for fuzzy activation functions of the sigmoid type.

The triangular membership functions, shown in the example of Figure 6A, are those most frequently used in fuzzy logics on account of they being easy to implement in hardware form.

The parameters that must be transferred to the inferential calculation block 12 (also present with the sigmoid membership functions) which calculates the degree of activation, are the vertices of the triangle representing the membership function.

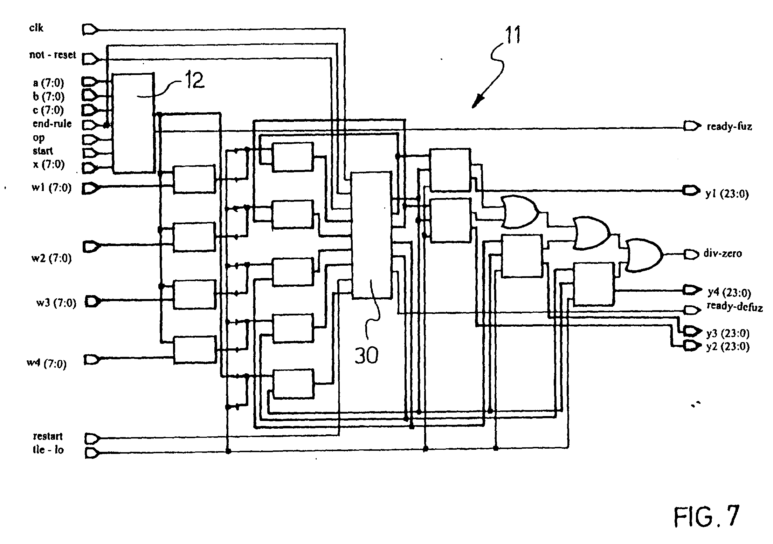

Its internal layout is shown in Figure 7.

The inferential calculation block 12 is to calculate the activation values and their products by the fuzzy logic "then" parts.

The block 12 itself comprises blocks AlfaCalc and Defuzzifier whose functions are specified herein below.

AlfaCalc: it calculates the activation value of the input x associated with a given membership function. To outline the technique employed for executing this calculation, it should be first noted that, as a non-limitative example, each membership function is identified by three, eight-bit encoded parameters 'a', 'b' and 'c' forming its left, center and right coordinates, respectively. Based on this postulate, it becomes possible to represent either membership functions of triangular form or membership functions with saturation. For the latter, either the parameters 'a' and 'b', or the parameters 'b' and 'c' can be taken to coincide, thereby to obtain a left trapezoidal and a right trapezoidal membership function, respectively.

This situation is illustrated schematically by Figures 6C and 6B.

Defuzzifier: it is arranged to store the summation of the activation values, as supplied by the block AlfaCalc, and to calculate the four summations of their product by the respective fuzzy logic "then" parts.

In view of the fuzzyfying and defuzzyfying methods used, only the minimum or maximum "if" part activation value should be stored for each fuzzy rule processed, according to the type of the operation being executed, and subsequently be multiplied by its "then" part. In order to extend the summation to just the minimum or maximum calculated values for each rule, a comparator 15 is used to have the currently stored value compared with the next from the block AlfaCalc. This value is only stored if found smaller than the current value.

This solution has the advantage of requiring less area and being faster, since none of the internal memories and other modules needed in the sigmoid membership function approach are used here. A disadvantage is a limited fuzzy system performance in terms of non-linearity and FNN learning.

### The Fuzzy Core for Sigmoid Membership Functions

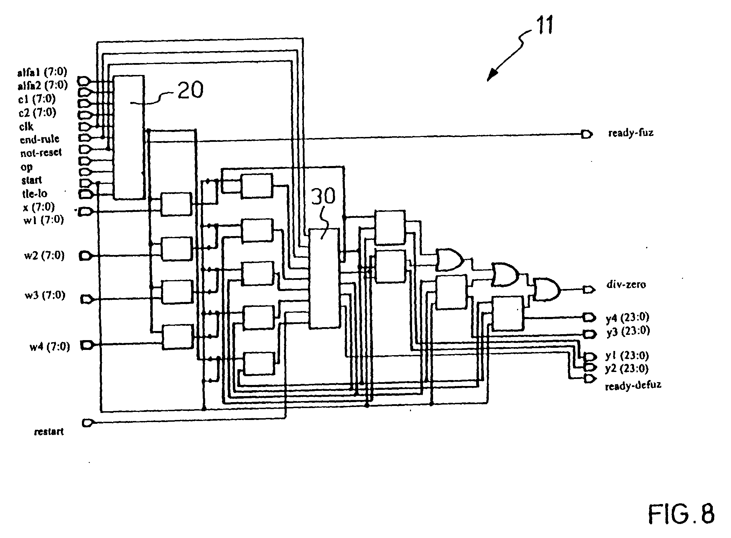

Its internal layout (Figure 8) is as detailed herein below.

It comprises a fuzzyfier block, designated 20, and a defuzzyfier block, designated 30, inside two macroblocks.

The sigmoid activation function is obtained as the difference between two membership functions having different centers and the same or different slopes, according to whether symmetrical or asymmetrical membership functions are sought.

For the purpose, a read-only memory is used, such as a ROM 19 wherein the values are stored of a normalized sigmoid of the following type:$\text{y =} \frac{\text{1 + tanh k}}{\text{2}}$ where the parameter k is given as:$\text{k = α(x - c)}$

Once the value of k has been calculated, and based on the slope a and the center c, it is used, through the block AlfaCalc, as the address in the ROM 19 wherefrom the corresponding ordinate value of the activation function can be read. It should be considered that the inputs α, x, c are 8-bit inputs, which means that they can represent values within the [0-255] range.

The architecture chosen being serial, the address is selected by the following logic:
the first function parameters are passed first;
the second function parameters are then passed using input multiplexers whose outputs are caused to switch over by a control signal SEL.

The following scheme is used.

When SEL=0, α1 and c₁ are loaded, and the first parameter k1 is calculated based on the current abscissa x; simultaneously therewith, SEL=1 is assumed, and α2 and c2 are loaded to calculate the parameter k2 using the same abscissa.

At k1 and k2, which represent the addresses in the ROM 19, the ordinate values of the activation function are read and the difference between these values is found. By iterating this process for all the combinations of the parameters α and c, the overall membership function is constructed.

Advantageously, the solution proposed in this invention takes into account the possibility of producing membership functions with a higher or lower slope than one.

### Fuzzyfier Block 20

This module is used for the so-called fuzzyfication of the system inputs X, and therefore, to calculate inferential fuzzy rules of the "If" parts, of the following type:
If x1 is A₁₁ AND/OR x₂ is A₁₂ AND/OR.............xₙ is A₁ₙ

The block 20 operates as explained herein below.

Each fuzzy set Aᵢⱼ is represented by the parameters α₁, c₁, a₂, c₂ indicating the slopes of the sigmoid branches and their centers. These parameters, expressed in an eight-bit binary code, are passed according to the type of the rule and along with a crisp input x to be fuzzyfied.

Before initiating a new set of fuzzy rules, the fuzzy block 20 should be reset, so that the signal not_reset becomes zero; in this way, the system is placed in its initial state with the outputs and the internal registers all cleared. When fuzzy rules are to be executed, the signal not_reset must take a value of one, this being mandatory for the architecture 1 to be made ready to execute all the operations contained in the following states. In order to move one state forward, and execute the calculation of the activation value of the instruction xᵢ is Aᵢ, it is necessary that the start signal be brought to a value of one. As the first instruction xᵢ is Aᵢ of a generic rule is encountered, the signal Op (Figure 2) must be brought to one, thus indicating that the first operation is a logic OR sum. This condition is necessary for the fuzzyfier block 20 to yield a correct result for the activation value; in fact, all the internal registers are initially cleared, and when the first instruction is presented, the OR operation, i.e. the calculation of the maximum value, is executed between the activation value just calculated and the value contained in the register ATTIVAZIONEINT, which is zero, thereby providing the correct value. If, during this first step, the operation had been a logic AND multiplication, i.e. the calculation of the minimum value, the result would be zero, that is erroneous.

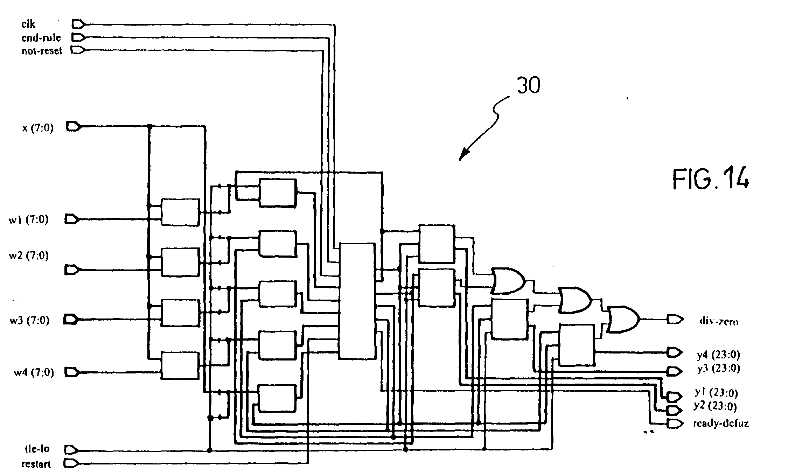

As previously mentioned, the membership functions are represented by two sigmoid branches, and only one of them is stored in the ROM 19 and normalized to the value k. To construct the membership function, the difference is found between two signoid branches having either different or the same slopes and centers; the result of this difference represents the corresponding activation value to the input x. One example is shown in Figure 13, where two sigmoid branches A, B have different parameters.

The architecture 1 is serial, and accordingly, the signal SEL=0 causes the parameters α1, c₁ and x to be passed which are used by the block rangel to calculate ki=αi(x-ci), representing the address in the ROM 19 whereat the corresponding activation value stored in it can be read. This value is used as an address bus add for the ROM 19, reading from the latter being always enabled by the ROM 19 having its input CS and OE at ground value GND. At the address location ki, the stored value is read which is at once loaded into an internal register, designated SIGMAO, of the inference block via a data bus 21 linked to the ROM 19. During this operation, the output signal ready takes a zero value, indicating that the fuzzy block 20 is processing a fuzzy instruction x is A. Subsequently, the signal SEL is brought to one (SEL=1) by the inference block enabling the input multiplexers 25 of a module RANGE 1 to select α2, c2, and the parameter k2=α2(x-c2) is calculated at x, and the same operation is executed as previously described for α₁ and c₁, excepting that the data is now loaded into a register SIGMA 1, also inside the inference block.

Thereafter, during the activation step, the difference is calculated between the contents of SIGMAO and SIGMA 1, which difference represents the activation value for the fuzzy instruction x₁ is A₁₁. On completion of this calculation, the signals SEL and READY are again brought down to make ready for calculation of a new instruction.

The foregoing is iterated as many times as are the number of fuzzy instructions xᵢ is Aᵢⱼ, while also passing each time the type of the composition rule, OR or AND, between them, through the signal op being either 0 or 1, respectively. The activation output will contain the partial value of the activation value so far calculated, which will only become definitive upon the signal fme_regola taking the value of one, thus indicating the arrival of the instruction "then" that marks the end of a rule to the fuzzyfier block 20.

### The Inference Block

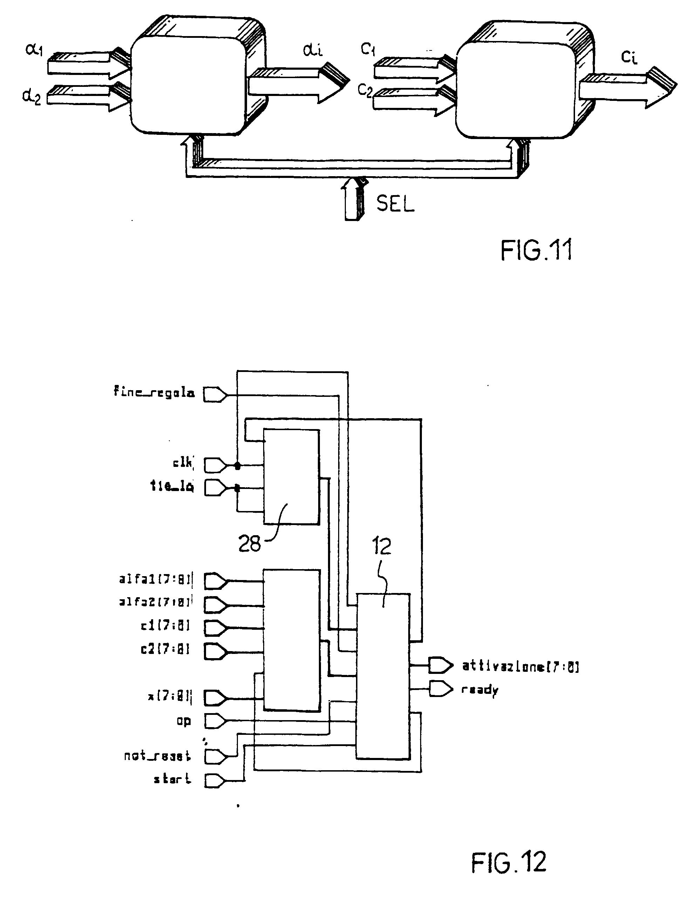

This block is represented in Figure 12 and is effective to carry out the fuzzyfication of the inputs.

### ROM 3

The read-only memory or ROM 28, also designated tanh, is arranged to store the values of one branch of a normalized sigmoid to the parameter k.

### Block ADDMEM

This module is intended for acquiring the parameters relating to the sigmoid membership functions sought and the input fuzzy sets, as well as for outputting the address of the location in the ROM 28 tanh whereat the input activation values or degrees of membership corresponding to the fuzzy sets can be read.

### Defuzzyfier Block 30

This module is intended for calculating the "then" parts of the fuzzy rules and fuzzyfying them by the centroid method, once the fuzzyfier block has output the degree of activation of the inputs. As previously mentioned, the number of rules is 256 at most, with eight inputs and four outputs per rule. However, larger numbers of these rules and the fuzzy instructions xᵢ is Aᵢⱼ could be provided at the expense of the computational speed only. The degree of activation of the inputs is dependent on the operation that has been selected in the inference block by means of the signal op. In fact, for a given input xᵢ, its value of activation to the fuzzy set is calculated using a membership function, designated wᵢ(xᵢ). This operation is carried out for all the inputs, and on its completion, the degree of activation, designated µ(Rᵢ) with Rᵢ being the i-th fuzzy rule, is calculated as AND, OR, product, scaling product of all µᵢ(xᵢ)'s. The defuzzyfier module 30 is indeed intended to convert the fuzzyfied outputs of the fuzzy rules into crisp values using the centroid method as given by the following relationship:

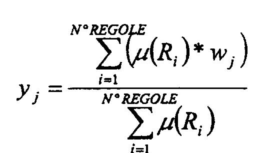

Figure 14 shows the internal architecture of the defuzzyfier block 30.

At the start of each fuzzy subroutine, the architecture 1 must be reset by enabling the signal not_reset to zero, in order to clear all the internal registers and the outputs. Directly after this, the signal not_reset is brought to one, and it is only then that the defuzzyfier block 30 will be input the eight-bit degree of activation of the fuzzy rules, as passed to it from the fuzzyfier block 20, and the eight-bit weightings W₁, W₂, W₃, W₄ of the FNN network connections, coming from the system input dual-port RAM unit 2, which weightings are multiplied with the modules MULT8 to yield a sixteen bits result. This operation is carried out in parallel with four multipliers 24 so as to obtain four defuzzyfied outputs per fuzzy rule. Since the activation signal contains the degree of partial activation of the fuzzy rules, which is to become definitive only when the signal end_rule is one (the equivalent of the instruction "then"), it becomes necessary to provide twenty four bits internal registers, initially resetted, to contain the sum of the signals OUTMOLI being the product of the activation by Wᵢ These outputs represent the numerators NUMI of relationship 6.6, the denominator DE being calculated using a sixteen bits adder and a register of the same dimension. The dimensions, twenty four and sixteen, descend from that in the former instance, 256 iterations must be provided, that is for the largest possible number of rules. Effecting the ratii, with four twentyfour-bit divisors, between NUMI and DE, the outputs y₁, y₂, y₃, y₄ are obtained which also have twenty four bits (of which only the sixteen least significant bits are meaningful since the eight most significant bits are always zeroes) and represent the four defuzzyfied outputs per fuzzy rule. The defuzzyfier block is a sequential machine.

The fuzzy neural network of this invention is designed to process sequentially any number of inputs; the maximum number of rules in the example is 256, but it may easily be raised above this value by increasing the number of bits of the internal modules (adders and multipliers and dividers) of the defuzzyfier block 30. Furthermore, the architecture of this invention can provide several parallel outputs (in the example, only four such outputs have been illustrated).

The operational code relating to the fuzzy instructions consists of encoding the set of fuzzy learning instructions and other operations in binary form, and in general, it would be the coding of the following rule format:
if x₁(tₖ) is A₁₁ AND/OR,...,xₙ(tₖ) is A₁ₙ then y₁(tₖ₊₁) is W₁₁,
y₂(tₖ₊₁) is W₁₂ y₃(tₖ₊₁) is W₁₃ y₄(tₖ₊₁) is W₁₄
--------------learning rules--------------${\text{w}}_{\text{i}} {\text{(t+1) = w}}_{\text{i}} \text{(t)±(δ*µ)*1/1024}$

If, at a time whatever, there occurs any abnormality or an interrupt signal, as caused by the supply system being turned off, for example, the data momentarily contained in the DPRAM unit 2 is at once dumped into the EEPROM to preserve the last weighting values, as modified by the learning process, of the FNN connections, as well as the activation values and the defuzzyfied outputs.

## Claims

1. A self-training neuro-fuzzy network architecture comprising at least one microcontroller (11) of the fuzzy type (fuzzyfier/defuzzyfier), dedicated to fuzzy rules computing and integrated monolythically on a semiconductor together with a non-volatile memory (9), characterized in that it comprises, within the same integrated circuit, a microprocessor (5) and a volatile memory unit (2) as well as an arbiter block (3) which is linked to a bus (4) interconnecting the fuzzy microcontroller (11), the microprocessor (5) and said volatile memory unit (2), said arbiter block (3) acting to control access to said memory unit (2) by the microprocessor (5) or the fuzzy microcontroller (11).

2. An architecture according to Claim 1, characterized in that it comprises an additional fuzzy co-processor (6) connected between the fuzzy microcontroller (11) and said microprocessor (5) and adapted to handle the fussy logic operations.

3. An architecture according to Claim 1, characterized in that it further comprises an ALU or arithmetic logic unit (7) associated with the microprocessor (5).

4. An architecture according to Claim 2, characterized in that said fuzzy co-processor (6) acts as a slave element to said master microprocessor (5).

5. An architecture according to Claim 3, characterized in that said ALU unit (7) is a sequential machine with internal registers.

6. An architecture according to Claim 1, characterized in that said memory unit (2) is a DPRAM (Dual Port RAM) type.

7. An architecture according to Claim 1, characterized in that it further comprises an I/O module (8) for handling and interfacing with external peripherals.

8. An architecture according to Claim 1, characterized in that

9. An architecture according to Claim 1, characterized in that it further comprises an interface (10) connected between said memory unit (2) and said non-volatile memory (9) to permit exchange of data between said memories.

10. A method of electronic control by self-training, for an electronic device monolithically integrated on a semiconductor and comprising at least one microcontroller (11) of the fuzzy type dedicated to fuzzy rules computing and a non-volatile memory (9), characterized by:
a volatile memory unit (2) whereinto the data contained in said non-volatile memory (9) is dumped;
a microprocessor (5) for picking up data from said memory unit (2) and executing predetermined sequences of instructions on said data;
and arbiter block (3) linked to a bus (4) interconnecting the fuzzy microcontroller (11), the microprocessor (5), and said memory unit (2);
a fuzzy co-processor (6) activated by said arbiter block (3) and operated as a slave element to said microprocessor (5) upon receipt and recognition of a fuzzy logic instruction from said memory unit.

11. A method according to Claim 10, characterized in that, in an initial state, only the microprocessor (5) is enabled, for reading from said memory unit (2), and that upon recognizing a fuzzy rule code, the co-processor (6) is enabled to allow the arbiter block (3) to access said memory unit (2).
